(19) Europäisches Patentamt
European Patent Office
Office européen des brevets

(11) EP 2 358 826 B1

(12) # EUROPÄISCHE PATENTSCHRIFT

(45) Veröffentlichungstag und Bekanntmachung des Hinweises auf die Patenterteilung:
**09.09.2015 Patentblatt 2015/37**

(21) Anmeldenummer: **09765115.2**

(22) Anmeldetag: **09.12.2009**

(51) Int Cl.:
***C09D 5/08*** (2006.01) ***C09D 7/12*** (2006.01)
***C09C 3/10*** (2006.01) ***C09C 1/56*** (2006.01)
***C09C 1/00*** (2006.01) ***C09C 1/30*** (2006.01)
*C08K 9/04* (2006.01) *C08K 3/00* (2006.01)

(86) Internationale Anmeldenummer:
**PCT/EP2009/066722**

(87) Internationale Veröffentlichungsnummer:
**WO 2010/066785 (17.06.2010 Gazette 2010/24)**

(54) **SELBSTABSCHEIDENDE WÄSSRIGE, PARTIKULÄRE ZUSAMMENSETZUNG ENTHALTEND PIGMENT-BINDEMITTEL-PARTIKEL**

SELF-PRECIPITATING AQUEOUS PARTICULATE COMPOSITION COMPRISING PIGMENT BINDER PARTICLES

COMPOSITION PARTICULAIRE AQUEUSE AUTO-DÉPOSANTE COMPRENANT DES PARTICULES DE PIGMENT-LIANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.12.2008 DE 102008061048**

(43) Veröffentlichungstag der Anmeldung:
**24.08.2011 Patentblatt 2011/34**

(73) Patentinhaber: **Henkel AG & Co. KGaA**
**40589 Düsseldorf (DE)**

(72) Erfinder:
- **DRONIOU, Patrick**
  **F-92700 Colombes (FR)**
- **MARKOU, Konstantinos**
  **50739 Köln (DE)**

(56) Entgegenhaltungen:
**EP-A1- 1 630 136**
**EP-A2- 1 270 687**
**WO-A1-2007/112503**
**WO-A1-2008/036259**
**US-B2- 7 138 444**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine saure wässrige partikuläre Zusammensetzung mit hoher Stabilität gegenüber Agglomeration für die autophoretische Abscheidung von organisch-anorganischen Hybridschichten auf Metalloberflächen enthaltend neben Eisen(III)-Ionen, Fluorid-Ionen und mindestens einem dispergierten organischen Bindemittel (B) Pigment-Bindemittel-Partikel zusammengesetzt aus einem Pigmentanteil und einem Bindemittelanteil (B1), wobei das Bindemittel (B1) ein Polymerisat von zumindest einem Säuregruppen tragendem Monomer, das zumindest eine polymerisierbare Doppelbindung aufweist, enthält. Ebenso betrifft die Erfindung die Verwendung einer wässrigen Dispersion enthaltend Pigment-Bindemittel-Partikel zusammengesetzt aus einem Pigmentanteil und einem Bindemittelanteil (B1) für die Herstellung einer selbstabscheidenden Zusammensetzung sowie ein Verfahren zur autophoretischen Abscheidung auf Metalloberflächen.

Selbstabscheidende Zusammensetzungen, die im technischen Sprachgebrauch auch als autophoretische Bäder bezeichnet werden, dienen der organischen Beschichtung von metallischen Oberflächen, zumeist Eisenoberflächen, als korrosionsschützende Primerbeschichtung von metallischen Bauteilen oder als adhäsive Zwischenschicht in der Herstellung von Metall-Elastomer-Verbindungen, beispielsweise für schwingungsdämpfende Bauteile in der Automobilindustrie. Die autophoretische Beschichtung ist also eine Tauchlackierung, die im Gegensatz zur Elektrotauchlackierung außenstromlos erfolgt, d.h. ohne die Anlegung einer äußeren Spannungsquelle. Die selbstabscheidenden Zusammensetzungen sind zumeist wässrige Dispersionen von organischen Harzen oder Polymeren, die bei Kontakt mit der metallischen Oberfläche aufgrund des Beizabtrages von Metall-Kationen in einer dünnen Flüssigkeitsschicht unmittelbar an der Oberfläche des Bauteils koagulieren und so den Schichtaufbau bedingen. Der Schichtaufbau ist selbstlimitierend, da die Bedeckung der Metalloberfläche mit den koagulierten Harz- und/oder Polymerpartikeln zu einer Abnahme der Metallauflösung führt, wodurch der Koagulationsprozess verlangsamt und schließlich beendet wird.

Die technische Umsetzung der autophoretischen Abscheidung verlangt eine ständige Kontrolle der Badzusammensetzung. Zunächst muss das Abscheidungsbad so eingestellt werden, dass eine Selbstabscheidung bei Kontakt mit dem Bauteil hinreichend schnell und homogen erfolgt, wobei gleichzeitig die Stabilität der Dispersion im Inneren des Tauchbades dauerhaft gewährleistet sein muss. Zusätzlich gilt es, die Konzentration der Kationen, die während des Abscheideprozesses vom Tauchbad aufgenommen werden, nicht über einen badspezifischen Schwellenwert ansteigen zu lassen, da anderenfalls die wässrige Dispersion als Ganzes instabil wird und koaguliert.

Die aus autophoretischen Bädern unmittelbar abgeschiedenen Beschichtungen haben zunächst eine gelartige Konsistenz und müssen daher zusätzlich verfilmt werden. Hierzu werden in den selbstabscheidenden Zusammensetzungen sowohl organische Harze als auch Härter eingesetzt, die bei thermischer Behandlung miteinander vernetzen, um so einen geschlossenen, mechanisch beanspruchbaren und vor Korrosion schützenden polymeren Überzug zu erzeugen.

Aus dem Stand der Technik sind sowohl tensidstabilisierte Dispersionen als auch polymerstabilisierte Dispersionen bekannt, die sich für die Bereitstellung einer selbstabscheidenden Zusammensetzung eignen.

Aus der US 7,037,385 sind wässrige Dispersionen eines ionisch modifizierten Phenol-Harzes bekannt, die durch die Zugabe einer Säure, vorzugsweise Phosphorsäure, selbstabscheidend eingestellt werden können. Die dort offenbarten ionisch modifizierten Phenol-Harze sind selbstdispergierend. Derartige Zusammensetzungen sollen neben dem Korrosionschutz des beschichteten Bauteils auch eine erhöhte Bruchfestigkeit der Beschichtung vermitteln. Die mechanischen Schichteigenschaften können gemäß der Lehre der US 7,037,385 über die Zugabe von flexibilisierenden Komponenten auf der Basis polymerer Verbindungen, beispielsweise Poly-Acrylnitril-Butadien oder Polyacrylate, reguliert werden.

Die US 7,138,444 offenbart hingegen Zusammensetzungen enthaltend eine Dispersion eines Epoxid-Harzes, die aus einer Emulsionspolymerisation von ethylenisch ungesättigten Verbindungen in Gegenwart eines Epoxid-Precursors hervorgeht. Zur Dispergierung werden mechanische Methoden unter Zuhilfenahme von oberflächenaktiven Verbindungen, vorzugsweise anionisch modifizierte Nonylphenolethoxylate, eingesetzt. Zusätzliche Komponenten sind ein Härter auf der Basis von blockierten Isocyanaten, sowie Verlaufs- und Koagulierhilfsmittel zur thermischen Verfilmung des selbstabgeschiedenen Überzuges. Des Weiteren lehrt die US 7,138,444, dass der Festkörpergehalt der Dispersion reduziert werden kann, wenn so genannte Beschleuniger bestehend aus Fluorid-Ionen und trivalenten Eisen-Ionen einer Dispersion des Epoxid-Harzes hinzugegeben werden.

WO 2008/036259 offenbart eine wässrige, partikuläre Zusammensetzung für die Selbstabscheidung auf metallischen Oberflächen mit einem pH-Wert von 1.6-3.8 enthaltend, a) ein dispergiertes organisches Bindemittel, b) Eisen-Ionen, i.e. Fe2+ oder Fe3+, c) Fluorid-Ionen und d) Kompositpartikel die aus einem Titanoxidpigment beschichtet mit einem Polymer ausgewählt aus Polyacrylat, Polyphophat, kationischem Polyacrylat, Epichlorhydrinharz, Dicyandiamidharz, Polymethacrylat, Polyol und Polyester bestehen.

Üblicherweise werden den autophoretischen Bädern weitere lacktypische Zusatzstoffe hinzugegeben, um der ausgehärteten selbstabgeschiedenen organischen Beschichtung bestimmte physikalische Eigenschaften zu verleihen. Die Zugabe von Farbpigmenten, speziell von Schwarzpigmenten auf Basis von Rußen, ist eine typische Maßnahme zur optisch deckenden Einfärbung der organischen selbstabgeschiedenen Beschichtung auf der Metalloberfläche. Allerdings zeigt die Praxis, dass derartige Formulierungen häufig nur eine geringe Stabilität aufweisen und die partikulären Bestandteile bereits nach kurzer Standzeit des autophoretischen Bades sedimentieren. Agglomerate von Rußpartikeln können zusammen mit dem dispergierten organischen Hauptbindemittel jedoch nicht mehr effektiv auf einer Metalloberfläche, die in derartige selbstabscheidende Zusammensetzungen eingebracht wird, homogen und filmbildend abgeschieden werden. So besteht im Stand der Technik nach wie vor ein Bedarf an äußerst stabilen partikulären Zusammensetzungen für autophoretische Anwendungen, die zusätzlich zum organischen Hauptbindemittel dispergierte Bestandteile enthalten, die anorganischer Natur sind und/oder als Feststoffpartikel mit einer anderen Partikelgrößenverteilung oder Oberflächenladung dispergiert vorliegen als das kolloidale organische Bindemittel. Ebenso wird insbesondere von der Automobilindustrie bei der Erstbeschichtung von Metalloberflächen gefordert, dass die Erstbeschichtung den metallischen Untergrund nicht nur kaschiert, sondern zusätzlich die Auftragung farbgebender Decklacke erlaubt. Hierfür sind jedoch nur solche Erstbeschichtungen gut geeignet, die im sichtbaren Bereich das Licht größtenteils reflektieren und daher einen entsprechend hohen Anteil an Weißpigmenten enthalten. Die Zugabe von dem Fachmann in der Lackherstellung bekannten Weißpigmenten, beispielsweise von Oxiden der Metalle Titan oder Zink, in eine autophoretische Zusammensetzung ergibt jedoch aufgrund der unterschiedlichen Art der Stabilisierung der anorganischen Pigmente und des dispergierten Hauptbindemittels zumeist keine stabilen partikulären Zusammensetzungen. So zeigen speziell Dispersionen anorganischer Pigmente auf Basis von Oxiden in Gegenwart mehrwertiger Metall-Kationen eine schnelle Agglomeration und können daher in selbstabscheidenden Zusammensetzungen mit einem hohen Anteil an Eisen(III)-Ionen nur schwer stabilisiert werden. Die Stabilisierung anorganischer Pigmente erfolgt dabei beispielsweise mit bestimmten Netzmitteln, die ionische und nichtionische oberflächenaktive Verbindungen oder wasserlösliche polymere Verbindungen sein können. Die spezifischen Netzmittel für anorganische Pigmente sind daher zumeist von anderer chemischer Natur als die für die Stabilisierung der kolloidalen Bestandteile des Bindemittels und für deren Einsatz in selbstabscheidenden Zusammensetzungen eingesetzt werden. In selbstabscheidenden Zusammensetzung liegt stets zumindest teilweise eine Stabilisierung durch anionische oberflächenaktive Substanzen vor. Die unterschiedliche Stabilisierung bedingt unmittelbar einen Austausch der oberflächenaktiven Substanzen für die jeweiligen dispergierten Bestandteile, so dass in derartigen Formulierungen ebenfalls Agglomeration stattfindet und die Badstabilität nur für einen begrenzten Zeitraum gegeben ist.

Darüber hinaus enthalten selbstabscheidende Zusammensetzungen für die Komplexierung der Eisen(III)-Ionen beträchtliche Mengen an Fluorid-Ionen, die insbesondere anorganische Pigmente auf Basis von Oxiden und Silikaten korrodieren und damit den für die autophoretische Beschichtung verfügbaren Pigmentanteil erheblich reduzieren und so eine kontinuierliche Zudosierung von Pigmentanteil und Fluorid-Ionen erforderlich machen, um einen erwünschten Zustand des autophoretischen Bades einstellen zu können. Je nach Auflösungskinetik der anorganischen Pigmente durch das anwesende Fluorid ist dies jedoch nicht möglich.

Darüber hinaus müssen die partikulären Bestandteile autophoretischer Bäder gegenüber Scherkräften, die beispielsweise beim Umwälzen des Bades in den Pumpständen auftreten, stabil sein. So neigen die handelsüblichen Pigment-Präparate, in denen der partikuläre Pigmentanteil mit Netzmitteln stabilisiert vorliegt, als Bestandteil von autophoretischen Bädern an den Stellen des Bades, an denen hohe Scherraten vorliegen, zu verstärkter Agglomeration, da Netzmittel von der Oberfläche der Pigment-Partikel abgeschert wird.

Die Aufgabe der vorliegenden Erfindung besteht demnach darin, zum einen die Stabilität von wässrigen partikulären Zusammensetzungen, die für die Selbstabscheidung auf Metalloberflächen geeignet sind und deren Partikelanteil aus einem dispergierten Bindemittelanteil und einem dispergierten Pigmentanteil besteht, in der technischen Praxis gegenüber einer schnellen Agglomeration zu erhöhen und zum anderen die Auflösung bestimmter anorganischer Pigmente in einer solchen partikulären Zusammensetzung effektiv zu unterdrücken.

Unter Pigmente werden im Sinne der vorliegenden Erfindung alle unlöslichen partikulären Bestandteile verstanden, die sowohl unter die DIN 55943 für Pigmente fallen als auch anorganische Füllstoffe darstellen, die dem Fachmann der Lackherstellung bekannt sind und beispielsweise für die Einstellung der mechanischen Eigenschaften von Lackbeschichtungen eingesetzt werden.

Diese Aufgabe wird gelöst von einer wässrigen, partikulären Zusammensetzung für die Selbstabscheidung auf metallischen Oberflächen mit einem pH-Wert von kleiner als 4, jedoch vorzugsweise nicht kleiner als 2, enthaltend

a) mindestens ein dispergiertes organisches Bindemittel (B),
b) Eisen(III)-Ionen,
c) Fluorid-Ionen in einem solchen Mengenanteil, dass das molare Verhältnis von Fluorid-Ionen zu Eisen(III)-Ionen aus wasserlöslichen Verbindungen mindestens 2 : 1 beträgt,
wobei die Zusammensetzung zusätzlich
d) dispergierte Pigment-Bindemittel-Partikel zusammengesetzt aus einem Pigmentanteil und einem Bindemittelanteil (B1) enthält, wobei der Bindemittelanteil (B1) zumindest teilweise aus einem Polymerisat von Monomeren mit polymerisierbarer Doppelbindung besteht, wobei zumindest ein Monomer zumindest eine Säuregruppe aufweist, so dass der Bindemittelanteil eine Säurezahl von zumindest 20 mg KOH / g aufweist.

Unter "selbstabscheidender Zusammensetzung" werden erfindungsgemäß solche Zusammensetzungen verstanden, die bei Kontakt mit metallischen Oberflächen, vorzugsweise solchen Oberflächen ausgewählt aus Eisen-, Zink- und Aluminium sowie deren Legierungen, die Koagulation der organischen Bestandteile der Zusammensetzung schichtbildend auf der Metalloberfläche herbeiführen. Dies erfordert primär, dass ein genügend großer Lösungsdruck von Metall-Kationen der zu beschichtenden Metalloberfläche bei Kontakt mit der selbstabscheidenden Zusammensetzung vorliegen muss, um die Destabilisierung der partikulären wässrigen Zusammensetzung und damit die Koagulation der kolloidal gelösten bzw. dispergierten Komponenten a) und d) als homogenen Film unmittelbar auf der Metalloberfläche einzuleiten. Ein derartiger koaleszierter Film der Kolloidbestandteile auf der Metalloberfläche ist thermisch aushärtbar und schützt die Metalloberfläche als vernetzte organisch-anorganische Hybridbeschichtung vor Korrosion. Sekundär ist eine erfindungsgemäße selbstabscheidende Zusammensetzung langzeitstabil und neigt damit nicht zur Koagulation in der wässrigen Phase, so dass derartige Zusammensetzungen eine genügende Standzeit aufweisen und sich für den Einsatz in Beschichtungsanlagen beispielsweise als Tauchbad eignen.

Der Partikelanteil der erfindungsgemäßen Zusammensetzung setzt sich zusammen aus der Gesamtheit der in dieser enthaltenen kolloidal-dispersen und wasserunlöslichen partikulären Verbindungen. Dieser umfasst daher den Anteil an dispergierten organischen Bindemitteln (B) gemäß Komponente a) und den Anteil an dispergierten Pigment-Bindemittel-Partikeln gemäß Komponente d) und ggf. dem Anteil an ebenfalls dispergierten organischen Bindemittel (B1), der nicht in Form dispergierter Pigment-Bindemittel-Partikel in der erfindungsgemäßen Zusammensetzung enthalten ist. Der Partikelanteil wird also teilweise von Partikeln gebildet, die zusammengesetzt sind aus einem Pigmentanteil und einem Bindemittelanteil (B1), wobei der Bindemittelanteil (B1) zumindest teilweise aus einem Polymerisat von Monomeren mit polymerisierbarer Doppelbindung besteht, wobei zumindest ein Monomer zumindest eine Säuregruppe aufweist.

Zur Bestimmung des Partikelanteils der Zusammensetzung kann die Destabilisierung und Agglomeration der Kolloide und der dispergierten partikulären Anteile durch die Erhöhung der Ionenstärke in der wässrigen Phase mittels der Zugabe von wasserlöslichen Salzen herbeigeführt werden, beispielsweise durch Zugabe hoher Konzentrationen von Fe(III)-oder Al(III)-Salzen. Die dabei hervorgerufene Phasentrennung ermöglicht die Bestimmung des Partikelanteils. Eine solche Phasentrennung kann für den Fall, dass Aniontenside zur Stabilisierung der Zusammensetzung eingesetzt werden, auch durch Demulgatoren auf der Basis von Kationtensiden, beispielsweise quarternären Alkylammonium-Verbindungen, vorgenommen werden.
Alternativ dazu kann der dispergierte Partikelanteil auch über eine vollständige Sedimentation, beispielsweise mittels Ultrazentrifugation physikalisch bestimmt werden.

Die erfindungsgemäßen partikulären Zusammensetzungen sind durch ihre hohe Stabilität gekennzeichnet, die darauf beruht, dass das zu dispergierende Pigment in Form von Pigment-Bindemittel-Partikeln vorliegt, in denen die Pigment-Partikel zumindest teilweise durch das organische Bindemittel (B1) eingekapselt vorliegen. Auf diese Weise kann zum einen die Agglomeration der Pigment-Bindemittel-Partikel in der erfindungsgemäßen Zusammensetzung, die zusätzlich auch das dispergierte Bindemittel (B) enthält, und zum anderen die Korrosion der Pigment-Partikel in der sauren Fluorid-haltigen Zusammensetzung weitgehend verhindert werden.

Die Eigenschaften einer erfindungsgemäßen Zusammensetzung unterscheiden sich demnach grundlegend hinsichtlich der Stabilität der Zusammensetzung und der Pigment-Partikel von einer solchen partikulären Zusammensetzung, die gleich große Anteile an identischen Pigmenten und Bindemitteln (B) und (B1) enthält, in denen jedoch der Pigmentanteil als solcher in Form vom Pigment-Partikeln und der Bindemittelanteil als solcher in Form von Bindemittel-Partikeln dispergiert vorliegt. In derartigen nicht erfindungsgemäßen Zusammensetzungen erfolgt sowohl eine schnelle Koagulation der partikulären Bestandteile als auch ggf. eine schnelle Auflösung von Pigment-Partikeln, insbesondere von metallischen Pigmenten und Pigmenten auf Basis anorganischer Oxide, so dass eine technische Anwendung von auf diese Weise zusammengesetzten selbstabscheidenden Bädern nicht möglich ist.

Die erfindungsgemäße wässrige, partikuläre Zusammensetzung für die Selbstabscheidung auf metallischen Oberflächen mit einem pH-Wert von kleiner als 4, jedoch vorzugsweise nicht kleiner als 2, enthaltend

a) mindestens ein dispergiertes organisches Bindemittel (B),
b) Eisen(III)-Ionen,
c) Fluorid-Ionen in einem solchen Mengenanteil, dass das molare Verhältnis von Fluorid-Ionen zu Eisen(III)-Ionen aus wasserlöslichen Verbindungen mindestens 2 : 1 beträgt, und
d) dispergierte Pigment-Bindemittel-Partikel zusammengesetzt aus einem Pigmentanteil und einem Bindemittelanteil (B1) enthält, wobei der Bindemittelanteil (B1) zumindest teilweise aus einem Polymerisat von Monomeren mit polymerisierbarer Doppelbindung besteht, wobei zumindest ein Monomer zumindest eine Säuregruppe aufweist,

ist erhältlich durch Zugabe einer Wasser enthaltenden Dispersion enthaltend Pigment-Bindemittel-Partikel hergestellt durch Dispergierung eines Pigmentanteils in Pulverform bestehend aus zumindest einem Pigment mit einem in Wasser dispergierten Bindemittelanteil (B1), wobei die Dispergierung mit Hilfe eines Dissolvers für 2 bis 120 min bei einer

Umlaufgeschwindigkeit der Dissolverscheibe von mindestens 20m/s durchgeführt wird bis zumindest ein Grindometerwert der Dispersion von weniger als 10 μm vorliegt, und wobei der Durchmesser der Dissolverscheibe vorzugsweise nicht größer als der halbe Durchmesser des Dissolverbehälters ist und der Abstand der Dissolverscheibe vom Boden des Dissolverbehälters vorzugsweise nicht weniger als den halben, aber nicht mehr als den ganzen Durchmesser der Dissolverscheibe beträgt, und wobei das Verhältnis der volumenbezogenen Anteile von Pigment zu Bindemittel (B1) vorzugsweise nicht größer als 3 : 1, besonders bevorzugt nicht größer als 3 : 2 ist, zu einer wässrigen Phase enthaltend

a) mindestens ein dispergiertes organisches Bindemittel (B),
b) Eisen(III)-Ionen,
c) Fluorid-Ionen in einem solchen Mengenanteil, dass das molare Verhältnis von Fluorid-Ionen zu Eisen-Ionen aus wasserlöslichen Verbindungen mindestens 2 : 1 beträgt.

Auf diese Weise sind erfindungsgemäße Zusammensetzungen erhältlich, in denen der dispergierte Pigmentanteil mit dem Bindemittel (B1) optimal benetzt ist.
Der Dissolver ermöglicht die Dispergierung von Einzelpartikeln des Pigmentanteils, indem Agglomerate der Pigment-Partikel bei den hohen Scherkräften aufgebrochen werden. In Anwesenheit des in Wasser dispergierten Bindemittels (B1) erfolgt die Benetzung der Pigment-Partikel mit dem Bindemittel (B1) und Pigment-Bindemittel-Partikel werden erzeugt.

Effektiv können nur solche partikulären Bestandteile der erfindungsgemäßen Zusammensetzung durch Koaleszenz auf einer Metalloberfläche abgeschieden und zu einer homogenen anorganisch-organischen Hybridbeschichtung verfilmt werden, deren Partikelgröße unterhalb von 10 μm liegt.
Demgemäß weist der dispergierte Partikelanteil in der erfindungsgemäßen Zusammensetzung vorzugsweise einen D90-Wert von nicht mehr als 10 μm, vorzugsweise nicht mehr als 5 μm auf. Ein D90-Wert gibt an, dass 90 Vol.-% der Partikel einer partikulären Zusammensetzung unterhalb der angegeben Partikelgröße liegen. Bestimmbar sind solche Werte aus volumengewichteten kumulativen Partikelgrößenverteilungen, die mit Hilfe dynamischer Lichtstreumethoden gemessen werden können.

Gegebenenfalls kann je nach Korngröße des zu dispergierenden Pigmentpulvers zusätzlich zur Dispergierung mit dem Dissolver eine Nassvermahlung mit einer Perlmühle vorgenommen werden, die solange durchgeführt wird, bis ein Grindometerwert von weniger als 10 μm nach DIN EN 21 524 in der Paste des Pigment-Bindemittels festgestellt wird. Die so erzeugte Paste kann dann nachfolgend für den Erhalt einer erfindungsgemäßen Zusammensetzung eingesetzt werden.

Die Benetzung des Pigment-Pulvers mit dem in Wasser dispergierten organischen Bindemittel (B1) und die damit erzielte hohe Stabilität der erfindungsgemäßen Zusammensetzungen enthaltend dispergierte Pigment-Bindemittel-Partikel ist nach dem zuvor beschriebenen Herstellverfahren, bei dem die Dispergierung der partikulären Bestandteile durch Scherkräfte in einem flüssigen Medium herbeigeführt wird, besonders effektiv für Pigment-Pulver mit einer Körnigkeit von größer als 1 μm. Vorzugsweise ist bei diesem Herstellverfahren das Verhältnis des D50-Wertes des feinkörnigsten Pigments zum D50-Wert des dispergierten Bindemittels (B1) zumindest 5, wobei der D50-Wert des feinkörnigsten Pigments in einer Dispersion des Pigmentpulvers in vollentsalzten Wasser nach Dispergierung mittels Dissolver, wobei identische Bedingungen wie für die Herstellung der Pigment-Bindemittel-Partikel angewandt werden, zu bestimmen ist. Das feinkörnigste Pigment ist dasjenige Pigment einer Mehrzahl von zu dispergierenden Pigmentpulvern mit dem geringsten D50-Wert.

In einem solchen bevorzugten Fall kann das Fortschreiten der Herstellung von Pigment-Bindemittel-Partikeln durch die Dispergierung mittels des Dissolvers anhand der Verringerung des dispergierten Bindemittelanteils (B1) in der volumengewichteten kumulativen Partikelgrößenverteilung nachvollzogen werden. Der partikuläre Anteil der dispergierten Bindemittel-Partikel (B1) ist dann vom Pigment-Anteil aufgrund ihrer mittleren Partikelgrößen unterscheidbar, so dass eine optimale Benetzung der Pigment-Partikel mit organischem Bindemittel (B1) dann erreicht ist, wenn der Anteil an organischen Bindemittel (B1) auch bei weiterer Dispergierung mit dem Dissolver nicht weiter abnimmt.
Unter Pigmenten werden wie bereits erwähnt wasserunlösliche anorganische Pulver verstanden. Sie umfassen Farbpigmente, Korrosionsschutzpigmente, Aktivpigmente aber auch Füllstoffe mit spezifischer Funktionalität, beispielsweise zur Einstellung der Schleifbarkeit oder der mechanischen Eigenschaften der selbstabgeschiedenen und ausgehärteten Beschichtung, wobei die mechanischen Eigenschaften in Prüfverfahren wie dem Dornbiege- oder Erichsen-Test bewertet werden. Zu den wasserunlöslichen Aktivpigmenten gehören auch metallische Pulver, vorzugsweise von unedlen Metallen wie Zink und Aluminium, die als solche zwar unter Wasserzersetzung in Lösung gehen, jedoch als Pigment-Bindemittel-Partikel ausreichend gegen Auflösung geschützt sind. Als wasserunlöslich gelten Pigmente, deren Bestandteile bei 20 °C eine Gleichgewichtskonzentration in der wässrigen Phase bei pH 7 von weniger als 1 mM, vorzugsweise von weniger als 0,1 mM aufweisen.

Bei den in der erfindungsgemäßen Zusammensetzung enthaltenen dispergierten Pigment-Bindemittel-Partikeln wird der Gesamtanteil an Pigmenten, die als solche Pigment-Bindemittel-Partikel in der Zusammensetzung vorliegen,

vorzugsweise zumindest von einem Pigment ausgewählt aus Farbpigmenten, Aktivpigmenten und/oder Korrosionsschutzpigmenten gebildet.

Der Pigmentanteil eines einzelnen Pigment-Bindemittel-Partikels besteht stets zumindest aus einem Pigmentpartikel ausgewählt aus Farbpigment-, Korrosionsschutzpigment- und/oder Aktivpigmentpartikeln.

Als bevorzugte Pigmente, die den Pigmentanteil der Pigment-Bindemittel-Partikel bilden, enthält die erfindungsgemäße Zusammensetzung mindestens eine Verbindung ausgewählt aus Oxiden, Carbonaten, Sulfaten und Phosphaten mindestens eines metallischen und/oder halbmetallischen Elements und/oder aus Ruß und Metallen, vorzugsweise Metallen mit einem negativen elektrochemischen Standardpotential.

Diese Verbindungen sind vorzugsweise ausgewählt aus den entsprechenden wasserunlöslichen Salzen mindestens eines der metallischen oder halbmetallischen Elemente Silizium, Titan, Zirkon, Zink, Chrom, Mangan, Eisen, Magnesium, Kalzium und Barium.

Besonders bevorzugte Farbpigmente als Pigmentanteil der Pigment-Bindemittel-Partikel in der erfindungsgemäßen Zusammensetzung sind Schwarz- und Weißpigmente ausgewählt aus Ruß, vorzugsweise oxidativ modifizierter Ruß mit mehr als 5 Gew.-% Sauerstoff, Titandioxid, Bariumsulfat und Zinkoxid.

Besonders bevorzugte Korrosionsschutzpigmente als Pigmentanteil der Pigment-Bindemittel-Partikel in der erfindungsgemäßen Zusammensetzung sind in Wasser unlösliche Phosphate der Elemente Zink, Eisen, Aluminium, Kalzium und/oder Mangan sowie Oxide der Elemente Zink, Zirkon, Silizium und/oder Eisen.

Besonders bevorzugte Aktivpigmente als Pigmentanteil der Pigment-Bindemittel-Partikel in der erfindungsgemäßen Zusammensetzung sind Carbonate und Sulfate der Elemente Kalzium, Barium, Strontium und metallische Pigmente der Elemente Zink, Aluminium und/oder Magnesium sowie Silikate.

Die dispergierten Pigment-Bindemittel-Partikel gemäß Komponente d) enthalten entsprechend der erfindungsgemäßen Zusammensetzung als Bindemittelanteil (B1) zumindest teilweise ein Polymerisat von Monomeren mit polymerisierbarer Doppelbindung, wobei zumindest ein Monomer zumindest eine Säuregruppe aufweist, um eine assoziierende Wechselwirkung des Bindemittelanteils mit dem Pigmentpartikel bei der Herstellung der Pigment-Bindemittel-Partikel aufzubauen und so eine hohe Stabilität der in der sauren wässrigen Zusammensetzung dispergierten Pigment-Bindemittel-Partikel zu gewährleisten.

Vorzugsweise weist der Bindemittelanteil (B1) der Pigment-Bindemittel-Partikel gemäß Komponente d) eine Säurezahl von zumindest 40, jedoch vorzugsweise von nicht mehr als 80, besonders bevorzugt von nicht mehr als 60 mg KOH / g auf. Höhere Säurezahlen des Bindemittels gemäß Komponente d) können dazu führen, dass in der selbstabgeschiedenen und vernetzten organisch-anorganischen Hybridbeschichtung enthaltend die Pigment-Bindemittel-Partikel stark hydrophile Oberflächenbereiche ausgebildet vorliegen, die für Wasser und typische korrosionsfördernde Salze und Verbindungen eine hohe Durchlässigkeit besitzen.

Für die zuvor beschriebene Bereitstellung der erfindungsgemäßen Zusammensetzung wird der Pigmentanteil in Pulverform mit dem Bindemittelanteil (B1) mechanisch verrieben und dispergiert. Der Bindemittelanteil (B1) liegt dabei zumindest im Herstellungsprozess der erfindungsgemäßen Zusammensetzung vorzugsweise als Wasser enthaltende Dispersion des Bindemittels (B1) vor. Eine solche Dispersion des Bindemittels enthaltend zumindest teilweise ein Polymerisat von Monomeren mit polymerisierbarer Doppelbindung, wobei zumindest ein Monomer zumindest eine Säuregruppe aufweist, ist über eine Emulsionspolymerisation erhältlich, bei der sämtliche Bindemittelanteile als hydrophobe Phase in Wasser homogenisiert, ggf. als Emulsion mit Hilfe von oberflächenaktiven Substanzen, die zumindest eine polymerisierbare Doppelbindung aufweisen, stabilisiert und anschließend mittels radikalischer Initiatoren polymerisiert werden. Eine solche Wasser enthaltende Dispersion des Bindemittels (B1) enthält dieses in Form kolloidaler Partikel, wobei das Bindemittel insgesamt und die Einzelpartikel der Dispersion des Bindemittels (B1) zumindest teilweise aus einem Polymerisat von Monomeren mit polymerisierbarer Doppelbindung, wobei zumindest ein Monomer zumindest eine Säuregruppe aufweist, zusammengesetzt sind. Insbesondere bevorzugt sind für die Herstellung von Pigment-Bindemittel-Partikeln Wasser enthaltende Dispersionen, in denen der D50-Wert der Partikel der Dispersion des Bindemittels (B1) bei einer Partikelgröße von nicht mehr als 500 nm liegt, besonders bevorzugt solche Dispersionen, in denen der D90-Wert der Partikel der Dispersion des Bindemittels (B1) bei einer Partikelgröße von nicht mehr als 500 nm liegt.

Die erfindungsgemäße selbstabscheidende Zusammensetzung enthält im Bindemittelanteil (B1) der Pigment-Bindemittel-Partikel zumindest teilweise ein Polymerisat von Monomeren mit polymerisierbarer Doppelbindung, wobei zumindest ein Monomer zumindest eine Säuregruppe aufweist. Das zumindest eine Monomer mit zumindest einer Säuregruppe ist vorzugsweise ausgewählt aus Acrylsäure, Methacrylsäure, Maleinsäure, Methylmaleinsäure, Fumarsäure, Itaconsäure, Vinylphosphonsäure, Vinylsulfonsäure, 2-acrylamido-2-methyl-propansulfonsäure und/oder Styrolsulfonsäure.

In einer besonders bevorzugten Ausführungsform der Zusammensetzung enthält das Bindemittel (B1) zumindest teilweise ein Polymerisat aus zumindest zwei Monomeren, wobei sowohl zumindest ein Monomer mit zumindest einer Carboxyl-Gruppe als auch zumindest ein Monomer mit zumindest einer Sulfonsäure-Gruppe enthalten sind. Hierdurch wird gewährleistet, dass zum einen das Bindemittel (B1) die Pigment-Partikel im alkalischen Medium hinreichend benetzt und damit dispergiert und zum anderen im sauren Medium der erfindungsgemäßen selbstabscheidenden Zusammensetzung eine hervorragende Stabilität der Pigment-Bindemittel-Partikel resultiert.
Das Monomer, das zumindest eine Carboxyl-Gruppe enthält, ist vorzugsweise ausgewählt aus Acrylsäure, Methacrylsäure, Maleinsäure, Methylmaleinsäure, Fumarsäure und/oder Itaconsäure.
Das Monomer, das zumindest eine Sulfonsäure-Gruppe enthält, ist vorzugsweise ausgewählt aus Vinylsulfonsäure, 2-acrylamido-2-methyl-propansulfonsäure und/oder Styrolsulfonsäure.

Es zeigt sich, dass eine besonders gute Stabilität der Pigment-Bindemittel-Partikel in der erfindungsgemäßen sauren Zusammensetzung dann vorliegt, wenn der Gewichtsanteil an Monomeren mit Sulfonsäuregruppen berechnet als Gewichtsanteil von $SO_3$ am Gesamtbindemittelanteil, der sich aus den Bindemitteln (B) und (B1) zusammensetzt, zumindest 0,5 Gew.-% beträgt.

Besonders bevorzugt besteht das Polymerisat teilweise aus zumindest einem Monomer mit Sulfonsäure-Gruppe und weiteren Monomeren ausgewählt aus Acrylsäure, Methacrylsäure, Maleinsäure, Methylmaleinsäure, Fumarsäure und Itaconsäure.

Zusätzlich kann das Polymerisat als Bestandteil des Bindemittels (B1) der Pigment-Bindemittel-Partikel mindestens ein Monomer mit einer polymersierbaren Doppelbindung, das keine Säuregruppe aufweist, enthalten, um die bevorzugten Bereiche für die Säurezahl des Bindemittels (B1) einzustellen. Diese Monomere, die keine Säuregruppe aufweisen, sind vorzugsweise ausgewählt aus Vinylestern, Vinylethern, Acrylsäureestern, Styrolen und/oder Acrylamiden.
Ferner kann das Polymerisat als Bestandteil des Bindemittels (B1) der Pigment-Bindemittel-Partikel zusätzlich zu mindestens einem Monomer mit polymerisierbarer Doppelbindung, wobei zumindest ein Monomer zumindest eine Säuregruppe aufweist, reaktive anionische Emulgatoren, die zumindest eine polymerisierbare Doppelbindung aufweisen, enthalten.
Derartige Emulgatoren vernetzen radikalisch mit den übrigen monomeren Bestandteilen und bilden dabei das Polymerisat als Bestandteil des Bindemittels (B1), das als solches über die anionische Kopfgruppe des Emulgators eine verbesserte Dispergierbarkeit der Pigment-Bindemittel-Partikel bewirkt, so dass eine nochmals gesteigerte Stabilität der erfindungsgemäßen Zusammensetzungen erhältlich ist.

Bevorzugte reaktive Emulgatoren basieren auf derivatisierten Polyoxyalkylenalkyl- bzw. Polyoxyalkylenarylethern, die in ihrem hydrophoben Grundgerüst eine ungesättigte Doppelbindung und im hydrophilen Grundgerüst eine anionische Kopfgruppe, vorzugsweise ausgewählt aus einer Sulfat-, Sulfonat-, Phosphat- und Phosphonat-Gruppe aufweisen.

In einer besonders bevorzugten Ausführungsform der erfindungsgemäßen Zusammensetzung sind die reaktiven anionischen Emulgatoren als Bestandteil des Bindemittels (B1) der Pigment-Bindemittel-Partikel ausgewählt aus Verbindungen, die der folgenden allgemeinen Strukturformel (I) entsprechen:

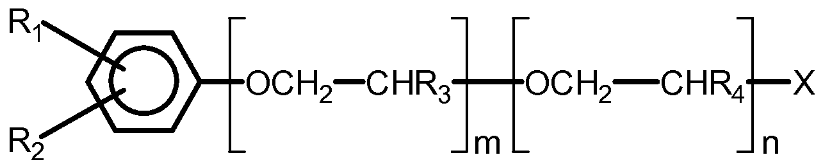 (I)

wobei $R_1$ ein aliphatischer Rest mit nicht mehr als 14, vorzugsweise nicht mehr als 12 Kohlenstoff-Atomen, aber zumindest 3 Kohlenstoff-Atomen ist;
wobei $R_2$ ein ungesättigter Alkylrest mit nicht mehr als 6 Kohlenstoffatomen, aber zumindest 2 Kohlenstoff-Atomen ist;
wobei $R_3$ und $R_4$ unabhängig voneinander ausgewählt sind aus Wasserstoff oder einer Methyl-Gruppe;
wobei m und n voneinander unabhängige natürliche Zahlen mit $1 \leq m+n \leq 60$ sind; wobei X eine anionische Gruppe ausgewählt aus $-O-SO_3$, $-SO_3$, $-O-PO_3$ oder $-PO_3$ ist.

Die erfindungsgemäße Zusammensetzung zeichnet sich insbesondere auch dadurch aus, dass ihr Partikelanteil nicht zusätzlich durch anionische Tenside stabilisiert werden muss, so dass die selbstabscheidende Zusammensetzung vorzugsweise nicht mehr als 10 ppm, besonders bevorzugt nicht mehr 1 ppm an anionischen Tensiden enthält, die keine polymerisierbaren Doppelbindungen aufweisen.

Erfindungsgemäß sind neben dem Polymerisat keine weiteren Bestandteile für das Bindemittel (B1) notwendig, um die Pigment-Partikel erfolgreich mit dem Bindemittel (B1) zu umschließen und damit in der selbstabscheidenden Zusammensetzung zu stabilisieren. Es kann jedoch bevorzugt sein, dass das Bindemittel (B1) weitere Bestandteile nach der Art des Bindemittels (B) enthält, um die thermische Vernetzung des Bindemittels (B) mit den Pigment-Bindemittel-Partikeln nach Koaleszenz der partikulären Bestandteile auf der Metalloberfläche zu verbessern. Enthält das Bindemittel (B1) ebenfalls Bestandteile, die thermisch vernetzende Funktionalitäten aufweisen, so können nach dem Aushärten deutlich verbesserte Barriereeigenschaften der organisch-anorganischen Hybridbeschichtung realisiert werden.

Geeignete zusätzliche Bestandteile des Bindemittels (B1), die kein Polymerisat von Monomeren mit polymerisierbaren Doppelbindungen darstellen und dennoch vorteilhaft zum einen für die Herstellung der Pigment-Bindemittel-Partikel und zum anderen für die Aushärtung der selbstabgeschiedenen Beschichtung sind, sind diejenigen, die im folgenden in der Beschreibung des dispergierten Bindemittels (B) gemäß der Komponente a) der erfindungsgemäßen Zusammensetzung genannt sind, insbesondere mindestens ein Epoxid-Harz und ggf. mindestens einen Härter für den Epoxid-Harz.

Organische Bindemittel (B) gemäß Komponente a) erfüllen das Erfordernis, wasserdispergierbar und thermisch vernetzbar zu sein. Derartige Bindemittel (B) bestehen daher aus organischen oligomeren oder polymeren Verbindungen mit mindestens zwei funktionalen Gruppen und sind demnach in der Lage, in Kondensations- oder Additionsreaktionen unter Ausbildung kovalenter Bindungen miteinander zu reagieren und dabei ein Netzwerk von kovalent verknüpften oligomeren oder polymeren Verbindungen aufzubauen. Bindemittel (B) können entweder aus einer selbstvernetzenden oligomeren oder polymeren Verbindung mit zwei unterschiedlichen oder gleichen zur Reaktion untereinander befähigten funktionalen Gruppen bestehen oder aus zumindest zwei unterschiedlichen oligomeren oder polymeren Verbindungen, die aufgrund ihrer Funktionalisierung untereinander vernetzen. Bezüglich der zuletzt genannten Variante spricht der Fachmann auch von einem Einkomponentensystem bestehend aus dem zu vernetzenden Harz und dem Vernetzer bzw. Härter.

Wasserdispergierbare Epoxid-Harze bewirken als vernetzte Beschichtung auf einer Metalloberfläche eine besonders gute Barrierewirkung gegenüber korrosiven Medien und sind daher bevorzugter Bestandteil des dispergierten Bindemittels (B) gemäß Komponente a) der erfindungsgemäßen selbstabscheidenden Zusammensetzung. Gegebenenfalls können das Epoxid-Harz vernetzende Härter, vorzugsweise zumindest teilweise auf Basis von Phenol-Harzen eingesetzt werden, um den Aushärteprozess zu beschleunigen und den Vernetzungsgrad zu erhöhen. Weitere das Epoxid-Harz vernetzende Härter sind solche auf der Basis von Isocyanat-Harzen, deren IsocyanatGruppen auch blockiert vorliegen können. Als bevorzugte blockierte Isocyanat-Harze sind mäßig reaktive Isocyanate im Bindemittel der Pigment-Bindemittel-Partikel enthalten, beispielsweise aliphatische Isocyanate und sterisch gehinderte und/oder säurestabil blockierte Isocyanate.

Als Epoxid-Harze dienen vorzugsweise nicht vollständig vernetzte, oligomere oder polymere Verbindungen mit freien, beispielsweise endständig gebundenen EpoxidGruppen, deren bevorzugtes Molekülgewicht nicht kleiner als 500 u und nicht größer als 5000 u ist. Beispiele für solche Epoxid-Harze sind Epichlorhydrin-Addukte an Bisphenol A und Bisphenol F, sowie Epoxy-Phenol-Novalake.

Aus Gründen der Wirtschaftlichkeit und der kommerziellen Verfügbarkeit werden im Rahmen der vorliegenden Erfindung bevorzugt auf Bisphenol A basierte Epoxid-Harze eingesetzt, die der folgenden allgemeinen Strukturformel (II) entsprechen:

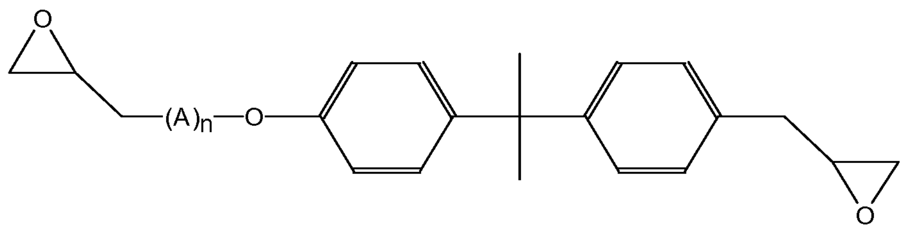

(II)

Der Strukturbaustein A entspricht dabei folgender allgemeinen Formel (III):

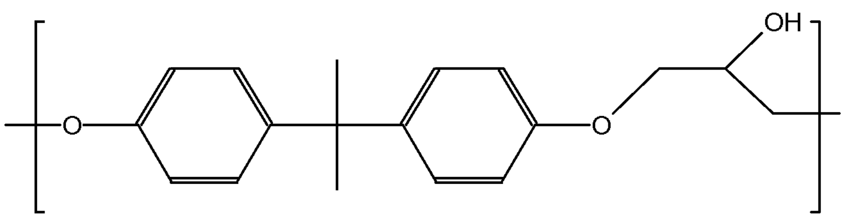

(III)

mit n als ganzzahliger Zahl von 1 bis 50.

Besonders bevorzugte Epoxide besitzen ein Epoxy-Äquivalentgewicht (EEW) von nicht weniger als 100 g/eq, aber nicht mehr als 5000 g/eq. Das EEW gibt dabei das mittlere Molgewicht pro Mol Epoxid-Funktionalität im Epoxid-Harz in Gramm pro Moläquivalent (g/eq) wieder. Für spezifische Epoxid-Harze existieren dabei besonders bevorzugte Bereiche für das Epoxy-Äquivalentgewicht:

| | | |
|---|---|---|
| Bromierte Epoxidharze | 300 - 1000 | g/eq, insbesondere 350 - 600 |
| Polyalkylenglykol Epoxidharze | 100 - 700 | g/eq, insbesondere 250 - 400 |
| Flüssige Epoxidharze | 150 - 250 | g/eq |
| Feste/pastöse Epoxidharze | 400 - 5000 | g/eq, , insbesondere 600 - 1000 |

Die optional ebenfalls zum Bindemittelanteil des dispergierten Bindemittels (B) zugehörigen Härter stellen vorzugsweise niedrig- und hochmolekulare organische Verbindungen mit Hydroxyl-Funktionalitäten und/oder Amin-Funktionalitäten dar, deren bevorzugte Molmasse nicht kleiner als 100 u und nicht größer als 10000 u ist. Besonders geeignete Härter weisen dabei Hydroxyl-Funktionalitäten auf und besitzen ein Hydroxyl-Äquivalentgewicht (HEW) von nicht weniger als 50 g/eq, besonders bevorzugt von nicht weniger als 200 g/eq auf, aber vorzugsweise ist das HEW nicht größer als 1000 g/eq und besonders bevorzugt nicht größer als 500 g/eq. Das HEW gibt dabei das mittlere Molgewicht pro Mol Hydroxyl-Funktionalität im Härter in Gramm pro Moläquivalent (g/eq) wieder, wobei das Hydroxyl-Äquivalentgewicht dabei auch "geschützte" Hydroxyl-Gruppen im Polymergrundgerüst des Härters umfasst, die über Kondensations- oder Additionsreaktionen temporär mit niedermolekularen organischen Verbindungen verknüpft vorliegen, aber diese bei erhöhter Temperatur unter Vernetzung mit dem Epoxid-Harz wieder abspalten. Eine bevorzugte "Schutzgruppe" sind niedermolekulare Alkohole, welche die Hydroxyl-Gruppe temporär in eine Ether-Gruppe umwandeln.

Dabei stellen die bevorzugten Phenol-Harze, die zumindest einen Teil des Härters bilden, nicht vollständig vernetzte, oligomere oder polymere Polykondensationsprodukte von Formaldehyden mit Phenolen dar, die vorzugsweise zumindest teilweise veretherte Hydroxyl-Gruppen aufweisen und deren bevorzugte mittlere Molekülmasse nicht kleiner als 500 u und nicht größer als 10000 u ist. Die filmbildende thermische Vernetzung des Epoxid-Harzes auf metallischen Oberflächen wird vergleichsweise weiter verbessert, wenn dieses vollständig aus Phenol-Harzen besteht und mehr als 50 %, vorzugsweise mehr als 80 % der Hydroxyl-Gruppen verethert vorliegen. Die Hydroxyl-Gruppen liegen dabei vorzugsweise methyliert, ethyliert, propyliert, butyliert oder ethenyliert vor. Als Phenol-Harz-Typen können sowohl Resole als auch Novolake verwendet werden. Des Weiteren sollte das massenbezogene Verhältnis von Epoxid- zu Phenol-Harz für eine optimale thermische Aushärtung des koaleszierten Kolloidanteils enthaltend das Bindemittel (B) vorzugsweise nicht größer als 95 : 5 und vorzugsweise nicht kleiner als 50 : 50 sein.

Um einerseits eine hinreichende Stabilität des dispergierten Bindemittels (B) und andererseits eine hinreichend effektive Koaleszenz der dispergierten Bindemittelpartikel auf der Metalloberfläche zu erzielen, sind solche erfindungsgemäßen Zusammensetzungen bevorzugt, in denen der D50-Wert der Partikel des dispergierten Bindemittels (B) bei einer Partikelgröße von nicht mehr als 500 nm liegt, insbesondere solche, in denen der D90-Wert der Partikel der Dispersion des Bindemittels (B) bei einer Partikelgröße von nicht mehr als 500 nm liegt. Ein D50-Wert gibt an, dass 50 Vol.-% der Partikel der Dispersion unterhalb der angegeben Partikelgröße liegen. Bestimmbar sind solche Werte aus volumengewichteten kumulativen Partikelgrößenverteilungen, die mit Hilfe dynamischer Lichtstreumethoden ermittelt werden können.

In einer bevorzugten Ausführungsform unterscheidet sich das Bindemittel (B) vom Bindemittel (B1) nur dadurch, dass zusätzlich zum Polymerisat von Monomeren mit polymerisierbarer Doppelbindung, wobei zumindest ein Monomer zumindest eine Säuregruppe aufweist, thermisch vernetzende organische Bestandteile, besonders bevorzugt die bereits zuvor beschriebenen Epoxid-Harze und ggf. Phenol-Harze als Härter enthalten sind.

Besonders bevorzugt ist eine erfindungsgemäße Zusammensetzung, in der der Bindemittelanteil (B1) ebenfalls zusätzlich thermisch vernetzende organische Bestandteile auf Basis von Epoxid-Harzen enthält und damit die Bindemittel (B) und (B1) aus identischen Bindemittelbestandteilen zusammengesetzt sind. Beide bevorzugten Ausführungsformen kennzeichnet, dass sowohl die Dispersion von zumindest einem organischen Bindemittel (B) als auch die Dispersion des Bindemittels (B1) zur Herstellung der Pigment-Bindemittel-Partikel über eine Emulsionspolymerisation der monomeren ungesättigten Bestandteile in wässriger Phase wie zuvor beschrieben erhältlich sind. Jedoch sind im Gegensatz zum Bindemittel (B1) solche dispergierten Bindemittel (B) gemäß Komponente a) der erfindungsgemäßen Zusammensetzung bevorzugt, die eine Säurezahl von weniger als 5 mg/KOH aufweisen, so dass beispielsweise der relative Anteil an thermisch vernetzenden Epoxid-Harzen im Bindemittel (B) größer ist als im Bindemittel (B1).

Des Weiteren ist für eine erfindungsgemäße Zusammensetzung bevorzugt, dass das volumenbezogene Verhältnis von Bindemittel (B) zu Bindemittel (B1) nicht kleiner als 1 : 3, vorzugsweise nicht kleiner als 1 : 2 ist.

Diese beiden zuletzt genannten Maßnahmen gewährleisten einen optimalen Korrosionsschutz der Metalloberfläche durch die ausgehärtete selbstabgeschiedene Beschichtung.

Insgesamt beträgt der dispergierte Partikelanteil an der erfindungsgemäßen Zusammensetzung vorzugsweise zumindest 1 Gew.-%, besonders bevorzugt zumindest 3 Gew.-%. Gehalte unterhalb von 1 Gew.-% an dispergiertem Bindemittel (B), Pigment-Bindemittel-Partikeln und ggf. dispergiertem Bindemittel (B1) erschweren die Selbstabscheidung einer Beschichtung dieser partikulären Bestandteile bei Kontakt der erfindungsgemäßen Zusammensetzung mit einer Metalloberfläche. Der Partikelanteil überschreitet für eine leichtere Instandhaltung des technischen Betriebes des selbstabscheidenden Bades vorzugsweise nicht 30 Gew.-%.

Unter dem Mengenanteil an Fluorid-Ionen der erfindungsgemäßen Zusammensetzung wird der Gesamtanteil an freien und komplex in wasserlöslichen Verbindungen gebundenen Fluorid-Ionen verstanden. Der Fluorid-Anteil bestimmt zum einen für die jeweilige Metalloberfläche die Beizrate in der erfindungsgemäßen Zusammensetzung und maskiert zum anderen Metall-Kationen, so dass die Koagulation der partikulären Bestandteile der erfindungsgemäßen Zusammensetzung auch bei erhöhtem Gehalt an Metall-Ionen verhindert wird, und erhöht so die Standzeit der selbstabscheidenden Bäder. Um die Beizrate auf die Metalloberfläche zu verstärken und die Koagulation in unmittelbarer Nähe zur Metalloberfläche zu beschleunigen, ist ein molares Verhältnis von Fluorid-Ionen zu Eisen(III)-Ionen von mindestens 3 : 1 in der selbstabscheidenden Zusammensetzung bevorzugt.
Jedoch sollte das molare Verhältnis von Fluorid-Ionen zu Eisen(III)-Ionen in der erfindungsgemäßen Zusammensetzung vorzugsweise 6:1, besonders bevorzugt 4:1 nicht überschreiten, da die Metalloberfläche ansonsten zu stark angegriffen wird und hohe Oberflächenrauigkeiten resultieren.

Der Gesamtanteil an in der erfindungsgemäßen Zusammensetzung gelösten Eisen(III)-Ionen beträgt vorzugsweise mindestens 0,02 Gew.-%, vorzugsweise jedoch nicht mehr als 0,3 Gew.-%, besonders bevorzugt nicht mehr als 0,2 Gew.-% bezogen auf das Element Eisen. Wird die bevorzugte Mindestmenge an Eisen(III)-Ionen deutlich unterschritten, so ist das Oxidationspotential der erfindungsgemäßen Zusammensetzung sehr gering und eine verzögerte Abscheidungskinetik für die partikulären Bestandteile die Folge. Die Veränderung bzw. Hemmung der Selbstabscheidung kann jedoch die Ausbildung von nicht homogenen Beschichtungen bewirken und ist daher eher nachteilig. Zu hohe Konzentrationen an Eisen(III)-Ionen können dazu führen, dass die zu behandelnden Metalloberflächen stark angegriffen werden und hohe Oberflächenrauigkeiten resultieren. Zusätzlich wird die Zusammensetzung auch bei relativ gleichen Anteilen an maskierenden Fluorid-Ionen eher anfällig für die Ausfällung von Eisen(III)-Salzen und die Koagulation von Partikelanteilen.

Um das Oxidationspotential zu erhalten oder weiter zu erhöhen, kann die wässrige Zusammensetzung zusätzlich ein Oxidationsmittel enthalten, vorzugsweise Wasserstoffperoxid. Der Zusatz von Wasserstoffperoxid ist insbesondere bei der Behandlung von eisenhaltigen Oberflächen für die Umwandlung von Eisen(II)- zu Eisen(III)-Ionen von Bedeutung, da Eisen(II)-Ionen die Stabilität der partikulär dispergierten Komponenten in Fluorid-haltigen Zusammensetzungen stärker herabsetzen als die entsprechenden Eisen(III)-Ionen.

Weitere fakultative Komponenten der erfindungsgemäßen Zusammensetzung sind Verlaufsmittel, wie Glykolether und Alkoholester, zur besseren Verfilmung des abgeschiedenen Überzugs auf der metallischen Oberfläche, sowie Entschäumer, vorzugsweise auf Basis nichtionischer Tenside.

In einer besonders bevorzugten Ausführungsform enthält die erfindungsgemäße partikuläre Zusammensetzung, bezogen auf die Gesamtzusammensetzung,

a) 0,5 bis 10 Gew.-% mindestens eines dispergierten organischen Bindemittels (B)

b) 0,02 bis 0,3 Gew.-% Eisen(III)-Ionen,

c) Fluorid-Ionen in einem solchen Mengenanteil, dass das molare Verhältnis von Fluorid-Ionen zu Eisen-Ionen aus wasserlöslichen Verbindungen mindestens 2 : 1 beträgt

d) einen Teil einer wässrigen Dispersion enthaltend Pigment-Bindemittel-Partikel erhältlich durch Dispergierung eines Pigmentanteils in Pulverform bestehend aus zumindest einem Pigment mit einem in Wasser dispergierten Bindemittelanteil (B1), wobei die Dispergierung mit Hilfe eines Dissolvers für 2 bis 120 min bei einer Umlaufgeschwindigkeit der Dissolverscheibe von mindestens 20m/s durchgeführt wird bis ein Grindometerwert der Dispersion von weniger als 10 $\mu$m vorliegt, und wobei der Durchmesser der Dissolverscheibe vorzugsweise nicht größer als der halbe Durchmesser des Dissolverbehälters ist und der Abstand der Dissolverscheibe vom Boden des Dissolverbehälters vorzugsweise nicht weniger als den halben, aber nicht mehr als den ganzen Durchmesser der Dissolverscheibe beträgt, und wobei das Verhältnis der volumenbezogenen Anteile von Pigment zu Bindemittel (B1) vorzugsweise nicht größer als 3 : 1 ist, und

so viel Wasser, Gegenionen zu b) und c) und ggf. weitere Hilfsstoffe, dass die Summe aller Bestandteile 100 Gew.-% ergibt und der Partikelanteil nicht kleiner als 3 Gew.-% ist.

Die volumenbezogenen Anteile von Pigment zu Bindemittel (B1) berechnen sich wie folgt:

$$\sum_i \frac{m(P_i)}{\rho(P_i)} \Big/ \frac{m(B1)}{\rho(B1)}$$

mit $m(P_i)$: Masse des i-ten Pigments

$r(P_i)$: Dichte des i-ten Pigments
m(B1): Masse des Bindemittels (B1) in der Dispersion des Bindemittels (B1)
r(B1): Dichte des Bindemittels (B1) nach Abtrennung und Trocknung des Bindemittelanteils (B1) von der Dispersion des Bindemittels (B1)

Hilfsweise kann zur Abschätzung der volumenbezogenen Anteile von Pigment zu Bindemittel (B1) eine Dichte des Bindemittels (B1) von 1,2 g/cm$^3$ angenommen werden.

Die Erfindung betrifft zusätzlich eine wässrige Dispersion enthaltend Pigment-Bindemittel-Partikel, zusammengesetzt aus einem Pigmentanteil und einem Bindemittelanteil (B1), wobei die Pigment-Bindemittel-Partikel als Bindemittel (B1) zumindest teilweise aus einem Polymerisat von zumindest zwei Monomeren mit polymerisierbarer Doppelbindung bestehen, wobei sowohl zumindest ein Monomer mit zumindest einer Carboxyl-Gruppe als auch zumindest ein Monomer mit zumindest einer Sulfonsäure-Gruppe enthalten sind, wobei das Verhältnis von volumenbezogenem Gesamtanteil der Pigmente zu volumenbezogenem Gesamtanteil des Bindemittels (B1) den Wert 3 nicht überschreitet und der Feststoffanteil in der Zusammensetzung zumindest 20 Gew.-% beträgt.
Eine solche erfindungsgemäße wässrige Dispersion weist eine hervorragende Stabilität auf und kann für die Herstellung einer zuvor beschriebenen erfindungsgemäßen selbstabscheidenden Zusammensetzung mit einem pH-Wert von kleiner als 4 verwendet werden.

In einem erfindungsgemäßen Verfahren zur Beschichtung von Metalloberflächen wird die gereinigte, entfettete bzw. von organischen Verunreinigungen befreite Metalloberfläche mit einer erfindungsgemäßen selbstabscheidenden Zusammensetzung in Kontakt gebracht. Bevorzugt sind dabei metallische Oberflächen, die ausgewählt sind aus Oberflächen von Eisen, Zink und/oder Aluminium, sowie deren jeweiligen Legierungen. Das In-Kontakt-Bringen der Zusammensetzung mit der metallischen Oberfläche oder dem metallischen Bauteil erfolgt bevorzugt im Tauch- oder Sprühverfahren, wobei das Tauchverfahren wegen der homogeneren Benetzung der Oberfläche besonders zu bevorzugen ist.

In einem laufenden erfindungsgemäßen Tauchverfahren, bei dem eisenhaltige Oberflächen behandelt werden, kann das Redox-Potential als Indikator für das Verhältnis von Eisen(II)-zu Eisen(III)-Ionen in der selbstabscheidenden Zusammensetzung herangezogen und durch die Zugabe von Wasserstoffperoxid reguliert werden, so dass eine möglichst lange Badstabilität gewährleistet werden kann. Das Redox-Potential ist das elektrochemische Gleichgewichtspotential eines Redox-Systems gemessen an einer inerten Metallelektrode, z.B. Platin.

In einer bevorzugten Ausführungsform folgt dem In-Kontakt-Bringen der Zusammensetzung mit der metallischen Oberfläche mit oder ohne dazwischenliegendem Spülschritt eine Reaktionsspüle.
Eine solche Reaktionsspüle erfüllt die Aufgabe, die nach dem erfindungsgemäßen Verfahren beschichtete Metalloberfläche gegenüber Korrosion zusätzlich zu schützen, und entspricht damit einer passivierenden Nachbehandlung der unvernetzten Beschichtung. Die Reaktionsspüle schließt sich der Behandlung mit einer selbstabscheidenden Zusammensetzung unmittelbar an, also mit oder ohne dazwischenliegendem Spülschritt, erfolgt aber im jeden Fall vor der Aushärtung des lackähnlichen Überzuges. Eine solche Reaktionsspüle bewirkt eine anorganische Konversion von freier Metalloberfläche an so genannten Mikro-Defekten, beispielsweise mit Hilfe Phosphathaltiger Lösungen, die zudem Alkali- und/oder Erdalkalimetall-Kationen und auch Übergangsmetallkationen sowie deren Fluorokomplexe enthalten kann.

Das Verfilmen der Beschichtung bzw. des Überzuges kann entweder unmittelbar nach dem In-Kontakt-Bringen der Zusammensetzung mit der metallischen Oberfläche, d.h. mit oder ohne dazwischenliegendem Spülschritt, erfolgen oder die Beschichtung wird erst nach vorgenommener Reaktionsspüle ausgehärtet. Der Prozess des Verfilmens oder des Aushärtens der gelartigen Beschichtung wird bevorzugt bei Temperaturen von mindestens 90 °C und höchstens 250 °C durchgeführt.

Ferner umfasst die vorliegende Erfindung ein metallisches Substrat, vorzugsweise ein Substrat mit Oberflächen von Eisen, Zink und/oder Aluminium, beschichtet im erfindungsgemäßen Verfahren durch In-Kontakt-Bringen des Substrates mit einer selbstabscheidenden Zusammensetzung.

In diesem erfindungsgemäßen Verfahren beschichtete metallische Substrate finden Verwendung in der Automobilfertigung, im Architektur-, Bau- und Landwirtschaftbereich, sowie für die Herstellung von Werkzeugen, Maschinen und "weißer Ware".

Ausführungsbeispiele:

Nicht gemäss der Erfindung.

1a - Herstellung einer Dispersion des Bindemittels (B):

Dispersionen des Hauptbindemittels (B) werden hergestellt aus einer im M-110 F Microfluidizer® (Reaktionskammern H 210Z und H 230Z, Fa.Microfluidics Corporation) bei 800 bar dreimal diskontinuierlich homogenisierten Emulsion der Zusammensetzung gemäß Tab. 1. Die dabei erzeugten Emulsionen weisen eine mittlere Partikelgöße

von ca. 250 nm und eine monomodale Partikelverteilung auf. Die Bestimmung der Partikelgröße und Partikelverteilung wurde mittels des Zetasizers® Nano S 90 (Fa. Malvern Instruments) vorgenommen.

Tab.1

Emulsion zur Herstellung einer wässrigen Dispersion 1a des Hauptbindemittels (B)

| Komponente | Chemische Bezeichnung | Mengenanteil in Gew.-% |
|---|---|---|
| Epoxidharz | Epichlorohydrin / Bisphenol A<br>EEW: 860-930 g/eq<br>$M_n$: ca. 2000 g/mol | 16,4 |
| Härter | Allylether der Mono-, Di- und Trimethylolphenole | 6,0 |
| Tensid | Ammoniumlaurylsulfat | 0,4 |
| Polymerisat:<br>- Monomere | <br>Butylacrylat<br>Methacrylsäure<br>Methylmethacrylat<br>Hydroxiethylmethacrylat<br>Styrol | 16,4<br>4,9<br>0,3<br>5,2<br>0,6<br>5,4 |
| Verlaufsmittel | Trimethylpentane-1,3-diol-monoisobutyrat | 1,4 |
| Wasser | VE-Wasser | 59,4 |

Dieser Öl-in-Wasser Emulsion wird sodann ein Initiatorsystem hinzugegeben (Tab. 2) und die radikalische Emulsionspolymerisation der ungesättigten Monomere bei 60 °C durchgeführt. Nach der Polymerisation erhält man eine Dispersion (1 a) des Hauptbindemittels gemäß Komponente a) der erfindungsgemäßen Zusammensetzung mit einem Partikelanteil von ca. 40 Gew.-%.

Tab.2

Initiatorsystem zur radikalischen Emulsionspolymerisation der emulgierten und homogenisierten Zusammensetzungen P1 und P2 gemäß Tab.1

| Komponente | Chemische Bezeichnung | Mengenanteil in Gew.-% [1] |
|---|---|---|
| Reduktionsmittel | Eisen(II)-Sulfat | $2{,}3 \cdot 10^{-4}$ |
| Oxidationsmittel | Natriumformaldehydsulfoxylat t-Butylhydroperoxid | 0,12<br>0,17 |

[1] bezogen auf die Gesamtzusammensetzung gemäß Tab.1

2a - Herstellung einer Dispersion des Bindemittels (B1):

Eine Dispersion des Bindemittels (B1) wird hergestellt aus einer im M-110 F Microfluidizer® (Reaktionskammern H 210Z und H 230Z, Fa.Microfluidics Corporation) bei 800 bar dreimal diskontinuierlich homogenisierten Emulsion der Zusammensetzung gemäß Tab. 1. Die dabei erzeugten Emulsionen weisen eine mittlere Partikelgöße von ca. 250 nm und eine monomodale Partikelverteilung auf. Die Bestimmung der Partikelgröße und Partikelverteilung wurde mittels des Zetasizers® Nano S 90 (Fa. Malvern Instruments) vorgenommen.

Tab.3
Dispersionen 2a des Bindemittels (B1) zur Herstellung von erfindungsgemäßen partikulären Zusammensetzungen über Emulgierung und anschließender radikalischer Emulsionspolymerisation

| Komponente | Chemische Bezeichnung | | Mengenanteil in Gew.-% | |
|---|---|---|---|---|
| Epoxidharz | 2a: | Epichlorohydrin / Bisphenol A<br>EEW: 500-575 g/eq<br>$M_n$: 1200 g/mol | 2a: | 17,9 |
| Härter | 2a: | Santolink | 2a: | 1,3 |
| Polymerisat: | | | 2a:<br>2b: | 24,3<br>38,3 |
| - Monomere | Butylacrylat | | 2a:<br>2b: | 6,0<br>10,6 |
| | Methacrylsäure | | 2a:<br>2b: | 3,0<br>5,3 |
| | Methylmethacrylat | | 2a:<br>2b: | 3,0<br>5,3 |
| | Hydroxiethylmethacrylat | | 2a:<br>2b: | 0,7<br>1,2 |
| | Styrol | | 2a:<br>2b: | 7,0<br>12,3 |
| | N,N-Dimethylacrylamid | | 2a: | 1,0 |
| - Reaktiver Emulgator | Hitenol BC 1025<br>Ammonium polyoxyethylen-(4-Nonyl-2-propenyl-phenyl)ethersulfat | | 2a: | 3,6 |
| Hilfsstoffe: | | | 2a:<br>2b: | 2,0<br>9,6 |
| - Entschäumer | 2,4,7,9-Tetramethyl-5-decyn-4,7-diol | | 2a:<br>2b: | 1,5<br>2,6 |
| - Weichmacher | Glykol-Mischung | | 2a:<br>2b: | 4,0<br>7,0 |
| Wasser | VE-Wasser | | 2a:<br>2b: | 56,3<br>52,1 |

Diesen Öl-in-Wasser Emulsionen wird sodann ein Initiatorsystem hinzugegeben (Tab. 2) und die radikalische Emulsionspolymerisation der ungesättigten Monomere bei 60 °C durchgeführt. Nach der Polymerisation erhält man eine Dispersion des Bindemittels (B1) mit einem Partikelanteil von ca. 40 Gew.-% für die Herstellung der Pigment-Bindemittel-Partikel gemäß Komponente d) der erfindungsgemäßen Zusammensetzung.
Die Dispersion (2a) eines Bindemittels (B1) enthält thermisch vernetzende Bindemittelkomponenten in Form eines Epoxid-Harzes und eines Phenol-Harzes während die Dispersion (2b) eines Bindemittels (B1) ausschließlich aus einem Polymerisat von Monomeren mit polymerisierbarer Doppelbindung, wobei zumindest ein Monomer zumindest eine Säuregruppe aufweist, zusammengesetzt ist. Die so hergestellten Dispersionen haben einen Festkörpergehalt von 35-40 % und einen pH-Wert zwischen 4,0 und 5,0. Die Teilchengröße nach der Polymerisation entspricht in etwa derjenigen der Emulsion vor der Polymerisation.

<u>3a, b - Herstellung einer Dispersion enthaltend Pigment-Bindemittel-Partikel:</u>

Die Herstellung einer wässrigen Dispersion enthaltend Pigment-Bindemittel-Partikel erfolgt durch mechanisches Homogenisieren eines Pigmentanteils in Pulverform mit einem Teil der Dispersion (2a, 2b) des Bindemittels (B1).

Anschließend werden handelsübliche Pigmente und ggf. weitere Additive wie z.B. Entschäumer, org. Lösemittel, Verlaufsmittel und Netzmittel in die Dispersion (2a, 2b) eingearbeitet.

Aus der Tabelle 4 ergibt sich für die Suspension 3a unter der Annahme einer Dichte des Bindemittels (B1) von 1,2 $g/cm^3$ ein volumenbezogenes Verhältnis von Pigment zu Bindemittel (B1) von 0,29.

| | |
|---|---|
| Ruß, Printex® 200: | $\rho$ = ca. 1,8 $g/cm^3$ |
| $TiO_2$, Tiona® 595: | $\rho$ = 4,1 $g/cm^3$ |
| Sillitin® Z 86: | $\rho$ = 2,6 $g/cm^3$ |

Tab.4

Suspensionen 3a und 3b für die Herstellung einer wässrigen Dispersion enthaltend Pigment-Bindemittel-Partikel zusammengesetzt aus einem Pigmentanteil und einem Bindemittelanteil (B1) durch Vermengen mit einem Dissolver und Nassvermahlung.

| Komponente | Chemische Bezeic Bezeichnung | | Mengenanteil in Gew.-% | |
|---|---|---|---|---|
| Dispersion (B1) | Bindemittelanteil | 2a: 43,5 % | 3a: | 65,2 |
| | | 2b: 38,3 % | 3b: | 74,0 |
| Pigmentanteil: | | | | 26,4 |
| - Farbpigmente | Ruß, Printex® 200 | | | 0,7 |
| | Titandioxid, Tiona® 595 | | | 23,5 |
| - Füllstoff | Kieselsäure / Kaolinit, Sillitin® Z 86 | | | 2,2 |
| Hilfsstoffe: | | | | 3,0 |
| - Entschäumer | 2,4,7,9-Tetramethyl-5-decyn-4,7-diol | | | 1,3 |
| - Weichmacher | Propylenglykol | | | 1,7 |

Die Suspensionen der Tabelle 4 werden für 5-10 Minuten mit einem Dissolver (Dispermat® F1, Fa. VMA Getzmann GmbH) bei einer Umlaufgeschwindigkeit der Dissolverscheibe 21 m/s vordispergiert und anschließend nach Austausch der Dissolverscheibe durch ein Mahlwerk und Zugabe von Siliziumcarbid-Mahlperlen mit einem Durchmesser von 1,5 mm für 60 Minuten vermahlen, wobei das Massenverhältnis von Perlen zu Mahlgut 3 : 2 beträgt, so dass ein Grindometerwert von < 10 $\mu$m erreicht wird.

4a,b-Herstellung einer Zusammensetzung:

Zur Herstellung wässriger partikulärer Zusammensetzungen, die für die Selbstabscheidung organisch-anorganischer Hybridschichten auf Metalloberflächen geeignet geeignet sind, wird ein Teil der wässrigen Dispersionen 3a und 3b enthaltend Pigment-Bindemittel-Partikel mit einem weiteren Teil der Dispersion 1a vermischt und die entsprechenden Mengen an Eisen(III)-Ionen und Fluorid-Ionen durch Zugabe entsprechender wasserlöslicher Verbindungen eingestellt.

Erfindungsgemäße Zusammensetzungen 4a und 4b mit hoher Stabilität gegenüber Agglomeration und Auflösung der oxidischen anorganischen Pigmente sind in der Tabelle 5 aufgeführt.

Tab.5

Erfindungsgemäße selbstabscheidende partikuläre Zusammensetzungen 4a und 4b

| Komponente | Chemische Bezeichnung | Mengenanteil in Gew.-% |
|---|---|---|
| a) Dispersion (B) | Bindemittelanteil 1a: 38,3 % | 10,6 |
| b) Eisen(III)-Ionen | Eisen(III)fluorid | 0,14 |
| c) Fluorid-Ionen | Fluorwasserstoff 59 % | 0,15 |

(fortgesetzt)

Erfindungsgemäße selbstabscheidende partikuläre Zusammensetzungen 4a und 4b

<table>
<tr><th>Komponente</th><th colspan="2">Chemische Bezeichnung</th><th>Mengenanteil in Gew.-%</th></tr>
<tr><td rowspan="4">d) Dispersion enthaltend Pigment-Bindemittel-Partikel:</td><td rowspan="2">- Pigmentanteil</td><td>3a: 26,4%</td><td rowspan="4">4,2</td></tr>
<tr><td>3b: 26,4%</td></tr>
<tr><td rowspan="2">- Bindemittelanteil (B1)</td><td>3a: 28,4%</td></tr>
<tr><td>3b: 28,4 %</td></tr>
<tr><td>Beschleuniger</td><td colspan="2">Wasserstoffperoxid 35 %</td><td>0,15</td></tr>
<tr><td>Wasser</td><td colspan="2">VE-Wasser</td><td>84,8</td></tr>
</table>

Der Gesamtpartikelanteil der erfindungsgemäßen Zusammensetzungen beträgt demnach ca. 6,4 Gew.-%.

## Patentansprüche

**1.** Wässrige, partikuläre Zusammensetzung für die Selbstabscheidung auf metallischen Oberflächen mit einem pH-Wert von kleiner als 4 enthaltend

a) mindestens ein dispergiertes organisches Bindemittel (B),
b) Eisen(III)-Ionen,
c) Fluorid-Ionen in einem solchen Mengenanteil, dass das molare Verhältnis von Fluorid-Ionen zu Eisen(III)-Ionen aus wasserlöslichen Verbindungen mindestens 2 : 1 beträgt,
**dadurch gekennzeichnet, dass** die Zusammensetzung zusätzlich
d) dispergierte Pigment-Bindemittel-Partikel zusammengesetzt aus einem Pigmentanteil und einem Bindemittelanteil (B1) enthält, wobei der Bindemittelanteil (B1) zumindest teilweise aus einem Polymerisat von Monomeren mit polymerisierbarer Doppelbindung besteht, wobei zumindest ein Monomer zumindest eine Säuregruppe aufweist, so dass der Bindemittelanteil eine Säurezahl von zumindest 20 mg KOH / g aufweist.

**2.** Zusammensetzung nach Anspruch 1, **dadurch gekennzeichnet, dass** das Polymerisat als Bestandteil des Bindemittels (B1) der Pigment-Bindemittel-Partikel gemäß Komponente d) zumindest ein Monomer mit zumindest einer Säuregruppe ausgewählt aus Acrylsäure, Methacrylsäure, Maleinsäure, Methylmaleinsäure, Fumarsäure, Itaconsäure, Vinylphosphonsäure, Vinylsulfonsäure, 2-acrylamido-2-methyl-propansulfonsäure und/oder Styrolsulfonsäure enthält.

**3.** Zusammensetzung nach einem oder beiden der vorherigen Ansprüche, **dadurch gekennzeichnet, dass** das Polymerisat als Bestandteil des Bindemittels (B1) der Pigment-Bindemittel-Partikel gemäß Komponente d) zumindest zwei Monomere enthält, wobei sowohl zumindest ein Monomer mit zumindest einer Carboxyl-Gruppe als auch zumindest ein Monomer mit zumindest einer Sulfonsäure-Gruppe enthalten sind.

**4.** Zusammensetzung nach einem oder mehreren der vorherigen Ansprüche, **dadurch gekennzeichnet, dass** das Polymerisat als Bestandteil des Bindemittels (B1) der Pigment-Bindemittel-Partikel gemäß Komponente d) zusätzlich zumindest ein Monomer mit einer polymeriserbaren Doppelbindung enthält, das keine Säuregruppe aufweist, und ausgewählt ist aus Vinylestern, Vinylethern, Acrylsäureestern, Styrolen und Acrylamiden.

**5.** Zusammensetzung nach einem oder mehreren der vorherigen Ansprüche, **dadurch gekennzeichnet, dass** das Pigment der Pigment-Bindemittel-Partikel gemäß Komponente d) ausgewählt ist aus mindestens einem Oxid, Carbonat, Sulfat und/oder Phosphat mindestens eines metallischen und/oder halbmetallischen Elements und/oder aus mindestens einem Ruß und/oder Metall.

**6.** Zusammensetzung nach Anspruch 5, **dadurch gekennzeichnet, dass** als Pigment der Pigment-Bindemittel-Partikel gemäß Komponente d) mindestens eine Verbindung ausgewählt aus wasserunlöslichen Salzen mindestens eines der metallischen oder halbmetallischen Elemente Silizium, Titan, Zirkon, Zink, Chrom, Mangan, Eisen, Magnesium, Kalzium und Barium enthalten ist.

**7.** Zusammensetzung nach einem oder mehreren der vorherigen Ansprüche, **dadurch gekennzeichnet, dass** das Polymerisat als Bestandteil des Bindemittels (B1) der Pigment-Bindemittel-Partikel gemäß Komponente d) zusätzlich reaktive anionische Emulgatoren, die zumindest eine polymerisierbare Doppelbindung aufweisen, enthält.

**8.** Zusammensetzung nach Anspruch 7, **dadurch gekennzeichnet, dass** die reaktiven anionischen Emulgatoren der folgenden allgemeinen Strukturformel (I) entsprechen:

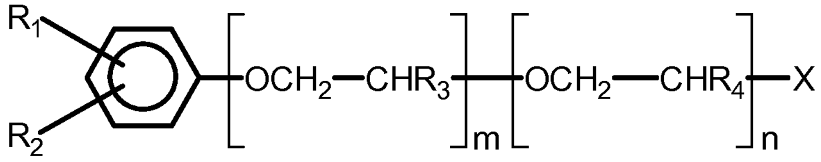 (I)

wobei $R_1$ ein aliphatischer Rest mit nicht mehr als 14, vorzugsweise nicht mehr als 12 Kohlenstoff-Atomen, aber zumindest 3 Kohlenstoff-Atomen ist;
wobei $R_2$ ein ungesättigter Alkylrest mit nicht mehr als 6 Kohlenstoffatomen, aber zumindest 2 Kohlenstoff-Atomen ist;
wobei $R_3$ und $R_4$ unabhängig voneinander ausgewählt sind aus Wasserstoff oder einer Methyl-Gruppe;
wobei m und n voneinander unabhängige natürliche Zahlen mit $1 \leq m+n \leq 60$ sind; wobei X eine anionische Gruppe ausgewählt aus $-O-SO_3$, $-SO_3$, $-O-PO_3$ oder $-PO_3$ ist.

**9.** Zusammensetzung nach einem oder mehreren der vorherigen Ansprüche, **dadurch gekennzeichnet, dass** als zusätzlicher Bestandteil des Bindemittels der Pigment-Bindemittel-Partikel gemäß Komponente d) mindestens ein Epoxid-Harz und ggf. ein Härter enthalten sind.

**10.** Zusammensetzung nach einem oder mehreren der vorherigen Ansprüche, **dadurch gekennzeichnet, dass** als dispergiertes organisches Bindemittel gemäß Komponente a) mindestens ein Epoxid-Harz und ggf. ein Härter enthalten sind.

**11.** Zusammensetzung nach einem oder mehreren der vorherigen Ansprüche, **dadurch gekennzeichnet, dass** die dispergierten organischen Bindemittel (B) gemäß der Komponente a) eine Säurezahl von weniger als 5 mg KOH / g aufweisen.

**12.** Zusammensetzung nach einem oder mehreren der vorherigen Ansprüche, **dadurch gekennzeichnet, dass** die partikuläre Zusammensetzung, bezogen auf die Gesamtzusammensetzung,

a) 0,5 bis 10 Gew.-% mindestens eines dispergierten organischen Bindemittels (B)
b) 0,02 bis 0,3 Gew.-% Eisen(III)-Ionen,
c) Fluorid-Ionen in einem solchen Mengenanteil, dass das molare Verhältnis von Fluorid-Ionen zu Eisen-Ionen aus wasserlöslichen Verbindungen mindestens 2 : 1 beträgt
d) einen Teil einer wässrigen Dispersion enthaltend Pigment-Bindemittel-Partikel erhältlich durch Dispergierung eines Pigmentanteils in Pulverform bestehend aus zumindest einem Pigment mit einem in Wasser dispergierten Bindemittelanteil (B1), wobei die Dispergierung mit Hilfe eines Dissolvers für 2 bis 120 min bei einer Umlaufgeschwindigkeit der Dissolverscheibe von mindestens 20m/s durchgeführt wird bis ein Grindometerwert der Dispersion von weniger als 10 $\mu$m vorliegt, und
so viel Wasser, Gegenionen zu b) und c) und ggf. weitere Hilfsstoffe enthält, dass die Summe aller Bestandteile 100 Gew.-% ergibt und der Partikelanteil nicht kleiner als 3 Gew.-% ist.

**13.** Verfahren zur selbstabscheidenden Beschichtung einer Metalloberfläche mit einem anorganische Pigmente enthaltenden organischen Bindemittelsystem, **dadurch gekennzeichnet, dass** man die gereinigte und entfettete Metalloberfläche mit einer Zusammensetzung nach einem oder mehreren der Ansprüche 1 bis 12 in Kontakt bringt.

**14.** Metallisches Substrat beschichtet in einem Verfahren gemäß Anspruch 13.

## Claims

**1.** Aqueous particulate composition for self-deposition onto metallic surfaces having a pH of less than 4, containing

a) at least one dispersed organic binder (B),
b) iron(III) ions,
c) fluoride ions in a proportion such that the molar ratio of fluoride ions to iron(III) ions from water-soluble compounds is at least 2:1,
**characterized in that** the composition additionally contains
d) dispersed pigment-binder particles composed of a pigment portion and a binder portion (B1), wherein the binder portion (B1) is composed at least partially of a polymer of monomers having a polymerizable double bond, wherein at least one monomer has at least one acid group, so that the binder portion has an acid number of at least 20 mg KOH/g.

2. Composition according to Claim 1, **characterized in that** the polymer, as an ingredient of the binder (B1) of the pigment-binder particles according to component d), contains at least one monomer having at least one acid group selected from acrylic acid, methacrylic acid, maleic acid, methylmaleic acid, fumaric acid, itaconic acid, vinylphosphonic acid, vinylsulfonic acid, 2-acrylamido-2-methylpropanesulfonic acid, and/or styrenesulfonic acid.

3. Composition according to one or both of the preceding claims, **characterized in that** the polymer, as an ingredient of the binder (B1) of the pigment-binder particles according to component d), contains at least two monomers, wherein at least one monomer having at least one carboxyl group, and also at least one monomer having at least one sulfonic acid group, are contained.

4. Composition according to one or more of the preceding claims, **characterized in that** the polymer, as an ingredient of the binder (B1) of the pigment-binder particles according to component d), additionally contains at least one monomer which has a polymerizable double bond and which does not contain an acid group, and which is selected from vinyl esters, vinyl ethers, acryl acid esters, styrenes, and acrylamides.

5. Composition according to one or more of the preceding claims, **characterized in that** the pigment of the pigment-binder particles according to component d) is selected from at least one oxide, carbonate, sulfate, and/or phosphate of at least one metallic and/or metalloid element and/or from at least one carbon black and/or metal.

6. Composition according to Claim 5, **characterized in that** at least one compound selected from water-insoluble salts of at least one of the metallic or metalloid elements silicon, titanium, zirconium, zinc, chromium, manganese, iron, magnesium, calcium, and barium is contained as pigment of the pigment-binder particles according to component d).

7. Composition according to one or more of the preceding claims, **characterized in that** the polymer, as an ingredient of the binder (B1) of the pigment-binder particles according to component d), additionally contains reactive anionic emulsifiers having at least one polymerizable double bond.

8. Composition according to Claim 7, **characterized in that** the reactive anionic emulsifiers correspond to the following general structural formula (I):

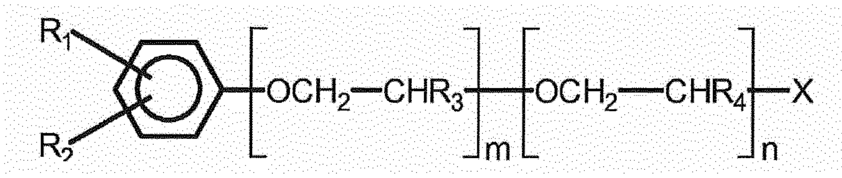
(I)
,

where $R_1$ is an aliphatic radical containing not more than 14, preferably not more than 12, carbon atoms, but at least 3 carbon atoms;
where $R_2$ is an unsaturated alkyl radical containing not more than 6 carbon atoms, but at least 2 carbon atoms;
where $R_3$ and $R_4$ independently of one another are selected from hydrogen or a methyl group;
where m and n independently of one another are natural numbers with $1 \leq m + n \leq 60$; where X is an anionic group selected from $-O-SO_3$, $-SO_3$, $-O-PO_3$, or $-PO_3$.

9. Composition according to one or more of the preceding claims, **characterized in that** at least one epoxy resin and optionally a hardener are contained as additional ingredient(s) of the binder of the pigment-binder particles according to component d).

**10.** Composition according to one or more of the preceding claims, **characterized in that** at least one epoxy resin and optionally a hardener are contained as dispersed organic binder according to component a).

**11.** Composition according to one or more of the preceding claims, **characterized in that** the dispersed organic binders (B) according to component a) have an acid number of less than 5 mg KOH/g.

**12.** Composition according to one or more of the preceding claims, **characterized in that** the particulate composition, based on the overall composition, contains

a) 0.5 to 10% by weight of at least one dispersed organic binder (B),
b) 0.02 to 0.3% by weight of iron(III) ions,
c) fluoride ions in a proportion such that the molar ratio of fluoride ions to iron ions from water-soluble compounds is at least 2:1,
d) a portion of an aqueous dispersion containing pigment-binder particles, which is obtainable by dispersing a pigment portion in powdered form, composed of at least one pigment having a binder portion (B1) dispersed in water, wherein the dispersion is carried out, using a dissolver, for 2 to 120 min at a rotational speed of the dissolver disk of at least 20 m/s until a grindometer value of the dispersion of less than 10 $\mu$m is present, and enough water, counterions to b) and c), and optionally further auxiliary substances such that the sum of all ingredients results in 100% by weight, and the particle content is not less than 3% by weight.

**13.** Method for the self-depositing coating of a metal surface with an organic binder system containing inorganic pigments, **characterized in that** the cleaned and degreased metal surface is brought into contact with a composition according to one or more of Claims 1 to 12.

**14.** Metallic substrate which is coated in a method according to Claim 13.

**Revendications**

**1.** Composition particulaire aqueuse destinée à l'auto-déposition sur des surfaces métalliques ayant une valeur de pH inférieure à 4, contenant

a) au moins un liant organique dispersé (B),
b) des ions fer (III),
c) des ions fluorures dans une quantité telle que le rapport molaire des ions fluorures sur les ions de fer (III) des composés hydrosolubles est d'au moins 2:1,
**caractérisée en ce que** la composition comprend en outre
d) des particules de pigment et de liant dispersées constituées d'une fraction de pigment et d'une fraction de liant (B1), la fraction de liant (B1) étant constituée au moins partiellement d'un produit de polymérisation de monomères ayant une double liaison polymérisable, au moins un monomère comportant au moins un groupe acide, de telle sorte que la fraction de liant ait un indice d'acidité d'au moins 20 mg de KOH/g.

**2.** Composition selon la revendication 1, **caractérisée en ce que** le produit de polymérisation contient, en tant que partie du liant (B1) des particules de pigment et de liant selon le composant d), au moins un monomère comportant au moins un groupe acide choisi parmi l'acide acrylique, l'acide méthacrylique, l'acide maléique, l'acide méthylmaléique, l'acide fumarique, l'acide itaconique, l'acide vinylphosphonique, l'acide vinylsulfonique, l'acide 2-acrylamido-2-méthyl-propanesulfonique et/ou l'acide styrène-sulfonique.

**3.** Composition selon l'une des revendications précédentes ou les deux, **caractérisée en ce que** le produit de polymérisation contient, en tant que partie du liant (B1) des particules de pigment et de liant selon le composant d), au moins deux monomères, à savoir au moins un monomère comportant au moins un groupe carboxyle et au moins un monomère comportant au moins un groupe acide sulfonique.

**4.** Composition selon l'une ou plusieurs des revendications précédentes, **caractérisée en ce que** le produit de polymérisation contient, en tant que partie du liant (B1) des particules de pigment et de liant selon le composant d), au moins un monomère comportant une double liaison polymérisable qui ne comporte pas de groupe acide et qui est choisi parmi les esters vinyliques. les éthers vinyliques, les esters d'acide acrylique, les styrènes et les acrylamides.

5. Composition selon l'une ou plusieurs des revendications précédentes, **caractérisée en ce que** le pigment des particules de pigment et de liant selon le composant d) est choisi parmi au moins un oxyde, un carbonate, un sulfate et/ou un phosphate d'au moins un élément métallique et/ou semi-métallique et/ou parmi au moins un noir de carbone et/ou un métal.

6. Composition selon la revendication 5, **caractérisée en ce qu'**elle contient comme pigment des particules de pigment et de liant selon le composant d) au moins un composé choisi parmi des sels insolubles dans l'eau d'au moins un des éléments métalliques ou semi-métalliques silicium, titane, zirconium, zinc, chrome, manganèse, fer, magnésium, calcium et baryum.

7. Composition selon l'une ou plusieurs des revendications précédentes, **caractérisée en ce que** le produit de polymérisation contient, en tant que partie du liant (B1) des particules de pigment et de liant selon le composant d), en plus des émulsifiants anioniques réactifs qui comportent au moins une double liaison polymérisable.

8. Composition selon la revendication 7, **caractérisée en ce que** les émulsifiants anioniques réactifs répondent à la formule structurelle générale suivante (I) ci-dessous :

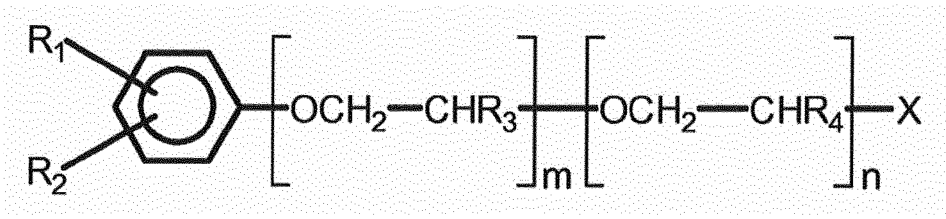
(I)

dans laquelle $R_1$ est un radical aliphatique ne comportant pas plus 14, de préférence pas plus de 12, atomes de carbone, mais au moins 3 atomes de carbone ;
dans laquelle $R_2$ est un radical alkyle insaturé ne comportant pas plus de 6 atomes de carbone, mais au moins 2 atomes de carbone ;
dans laquelle $R_3$ et $R_4$ sont choisis indépendamment l'un de l'autre parmi un atome d'hydrogène ou un groupe méthyle ;
dans laquelle m et n sont des nombres entiers indépendants avec $1 \leq m+n \leq 60$ ;
dans laquelle X est un groupe anionique choisi parmi $-O-SO_3$, $-SO_3$, $-O-PO_3$ ou $-PO_3$.

9. Composition selon l'une ou plusieurs des revendications précédentes, **caractérisée en ce qu'**elle contient comme composant supplémentaire du liant des particules de pigment et de liant selon le composant d) au moins une résine époxy et éventuellement un agent de durcissement.

10. Composition selon l'une ou plusieurs des revendications précédentes, **caractérisée en ce qu'**elle contient comme liant organique dispersé selon le composant a) au moins une résine époxy et éventuellement d'un agent de durcissement.

11. Composition selon l'une ou plusieurs des revendications précédentes, **caractérisée en ce que** les liants organiques dispersés (B) selon le composant a) présentent un indice d'acidité inférieur à 5 mg de KOH/g.

12. Composition selon l'une ou plusieurs des revendications précédentes, **caractérisée en ce que** la composition particulaire contient, sur la base de la composition totale,

a) 0,5 à 10% en poids d'au moins un liant organique dispersé (B),
b) 0,02 à 0,3% en poids d'ions fer (III),
c) des ions fluorures dans une quantité telle que le rapport molaire des ions fluorures sur les ions fer de composés hydrosolubles est au moins 2:1,
d) une partie d'une dispersion aqueuse contenant des particules de pigment et de liant pouvant être obtenues par dispersion d'une fraction de pigment sous forme de poudre consistant en au moins un pigment ayant une fraction de liant dispersée dans l'eau (B1), la dispersion étant effectuée à l'aide d'un dissolveur pendant 2 à 120 min à une vitesse de rotation du disque de dissolveur d'au moins 20 m/s jusqu'à obtenir une valeur de grindomètre de la dispersion de moins de 10 µm, et
de l'eau, des contre-ions de b) et c) et éventuellement d'autres adjuvants dans une quantité telle que la somme

de tous les constituants donne 100% en poids et que la fraction de particules n'est pas inférieure à 3% en poids.

13. Procédé de revêtement à auto-déposition d'une surface métallique comportant un système de liant organique contenant des pigments minéraux, **caractérisé en ce que** l'on amène la surface métallique nettoyée et dégraissée en contact avec une composition selon l'une ou plusieurs des revendications 1 à 12.

14. Substrat métallique revêtu selon un procédé de la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7037385 B
- US 7138444 B
- WO 2008036259 A